# DEMANDE DE BREVET EUROPEEN

(11) **EP 0 763 685 A1**
(43) Date de publication de la demande: **19.03.1997**
(21) Numéro de dépôt: 96401719.8
(22) Date de dépôt: 02.08.1996
(51) Int. Cl.: F16L 11/20, F16L 11/12, F16L 39/00

(54) **Tuyau formé d'au moins deux gaines concentriques**

(30) Priorité: 03.08.1995 FR 9509482
(71) Demandeur: GROUPEMENT D'INTERET ECONOMIQUE GAZINOX, 75017 Paris (FR)
(72) Inventeur: Bellan, Gérard André, 75018 Paris (FR); Peronne, Michel Jean Gaston, 92000 Nanterre (FR)
(74) Mandataire: Rataboul, Michel Charles

(57) **Abrégé**

Le tuyau est destiné au transport de fluides, en particulier de l'eau ou du gaz, et est du type comprenant au moins une conduite intérieure déformable transversalement selon toute sa longueur et dans laquelle doit circuler le fluide, ainsi qu'une gaine extérieure distincte de la conduite intérieure et toutes deux concentriques.

Il est caractérisé en ce que la conduite intérieure (1) est étanche à elle seule et est extérieurement en métal à forte résistance mécanique pour supporter des efforts tels que force et chocs d'écrasement, de valeur nettement supérieure à celle de contraintes dues à un usage normal du tuyau, rongements et morsures d'animaux, percements, coupures et autres, et présente des espaces, des irrégularités ou une porosité de nature à retenir des impuretés, résidus et micro-organismes, tandis que la gaine extérieure (2) est en une seule pièce de matière synthétique flexible, qui présente une résistance mécanique faible mais une surface extérieure continue et lisse, c'est-à-dire ne présentant ni espaces, ni irrégularités, ni même de porosité de nature à retenir des impuretés, résidus ou micro-organismes.

## Description

Il existe un très grand nombre de moyens différents pour obtenir un tuyau bien adapté au fluide qu'il doit transporter.

On écartera ici les tuyaux rigides car l'invention ne les concerne pas.

Reste donc les tuyaux flexibles et les tuyaux déformables.

Les tuyaux flexibles sont généralement souples et s'ils reprennent tout de suite leur section initiale quand on tend à les écraser, il n'en est pas de même de leur forme considérée transversalement sur toute leur longueur, car cette forme est pour ainsi dire indifférente.

Les tuyaux déformables sont généralement durs radialement et ils ne peuvent être écrasés ni dans des conditions normales d'utilisation, ni accidentellement pour des causes ordinaires et prévisibles.

Certains sont déformables élastiquement, sur toute leur longueur, car ils reprennent naturellement leur forme initiale quand cesse la force qui les déforme. D'autres gardent à peu près la forme qu'on leur donne, dans le sens transversal sur toute leur longueur, étant bien entendu que leur section n'est pas modifiée lors de cette déformation transversale.

Ces tuyaux sont donc malléables puisqu'on peut leur donner des formes variées, en particulier en les coudant, mais dans la pratique on dit qu'ils sont ployables.

Ce résultat peut être obtenu soit par une conduite unique spécialement conçue, notamment multicouches, soit en combinant les caractéristiques d'une conduite et d'une gaine distinctes l'une de l'autre.

Un exemple d'un tel tuyau est donné par le brevet EP-A-0.474.583.

Une conduite unique qui est à la fois résistante à l'écrasement et déformable transversalement est généralement annelée, en spirale ou pas.

Selon le matériau dont elle est faite, une telle conduite est plus ou moins élastique, plus ou moins ployable.

Le brevet US-A-5.275.208 décrit une telle conduite dont la partie intérieure annelée est en matière synthétique polymère fragile et noyée dans une gaine extérieure de renforcement, un matériau poreux et spongieux étant intercalé entre la partie intérieure annelée et la gaine de renforcement extérieure.

On remarque que la gaine de renforcement extérieure n'est ni lisse ni continue au sens réel du terme mais présente des irrégularités, ou ondulations, ou espaces qui proviennent de la constitution même de cette gaine qui est faite par enroulement de fils, de tresses ou de tissus et que l'on voit particulièrement bien sur les figures 4 à 6 et 8 à 14.

Une telle gaine présente le défaut typique d'être de nature à retenir toutes sortes d'impuretés, résidus et micro-organismes, comme des corps gras, des liquides organiques, des poussières propices au développement microbien.

A ce défaut, s'ajoute celui de n'être pas vraiment résistante à des causes possibles d'agressions telles que coupures et percements accidentels, morsures ou rongements d'animaux.

Ces deux défauts, par exemple, sont redhibitoires pour des tuyaux de raccordement d'appareils ménagers à un réseau de gaz.

Le brevet DE-A-4.315.175 décrit une structure tout à fait semblable à la précédente : une conduite intérieure annelée en matière synthétique est entourée d'une gaine de consolidation présentant une grande résistance à l'extension, afin, d'une part, de contenir une forte pression intérieure (60 bar) à laquelle ne résisterait pas la conduite intérieure et, d'autre part, de résister à l'allongement de l'ensemble, grâce au blocage de la gaine par des raccords d'extrémité.

La seule indication concernant la gaine extérieure est qu'elle peut être faite en matière synthétique telle qu'un polyamide, ce qui montre bien que ce brevet n'enseigne aucunement une solution au problème de la solidité et de l'hygiène.

Une conduite et une gaine combinées peuvent consister aussi en une structure inverse de la précédente, à savoir en une conduite intérieure souple, étanche mais fragile, entourée d'une armure de protection constituée d'une gaine annelée en métal (cas des tuyaux d'eau pour douchettes à main, par exemple).

Le brevet DE-A-3.840.721 décrit une solution de ce genre, l'armure extérieure étant constituée par une tresse dont la surface extérieure est éminemment dangereuse quant à la rétention d'impuretés, de résidus et de microbes qui peuvent s'infiltrer facilement entre les mailles de la tresse et y séjourner, à l'abri de toute tentative de nettoyage et de désinfection puisque, selon ce brevet, elles est partout accessible, tout le long du tuyau, sauf près de ses extrémités où elle est recouverte d'un manchon coloré, lequel ajoute encore au risque de dépôt d'impuretés et au développement de micro-organismes, infiltrés sous les manchons et, à ce titre, absolument inaccessibles à un nettoyage correct.

Il semble en effet normal de donner à la conduite intérieure les qualités d'étanchéité qui font qu'elle est bien adaptée aux caractéristiques physico-chimiques de fluide transporté, indépendamment de toute préoccupation de solidité, et de donner à la gaine extérieure les qualités mécaniques de robustesse qui lui font jouer exclusivement un rôle de protection de la conduite intérieure.

En variante du principe rappelé ci-dessus, on connaît aussi des conduites uniques mais composites, faite dans un matériau armé, c'est-à-dire que la gaine de protection au lieu d'être individualisée et visible à l'extérieur de l'ensemble est noyée dans la matière constitutive de la conduite.

La "gaine" de protection peut être réelle ou virtuelle, c'est-à-dire formée d'éléments d'armature non nécessairement liés en un ensemble unique.

C'est le cas de conduites faites en un élastomère enrobant une toile ou une tresse métallique, ou des anneaux, etc.

Des conduites de ce genre se trouvent habituellement avec des équipements de véhicules et sont connues sous le nom déposé de "DURITES", mais celles-ci ne sont pratiquement pas déformables et sont fabriquées à la forme voulue.

Toutes les solutions connues présentent des inconvénients plus ou moins marqués, venant essentiellement du fait que l'on cherche une solution unique à plusieurs problèmes différents.

Ainsi, par exemple, un tuyau annelé en métal présente beaucoup de qualités quant à sa solidité et à son étanchéité mais il a une présentation contestable et des qualités nulles vis à vis de la propreté de sa surface extérieure qui présente une multitude de creux dans lesquels s'incrustent les poussières et les vapeurs grasses par exemple, toutes propices au développement microbien.

Il en est ainsi des tuyaux annelés en gégéral, qu'ils soient en métal ou en matière plastique.
On comprend que ces défauts viennent pour l'essentiel du principe même qui veut que l'on se préoccupe uniquement de donner à la conduite seule ou à la gaine de renforcement extérieure des qualités de solidité relative, et de résistance mécanique ordinaire, indépendamment de toute notion de propreté, d'esthétique ou de repérage.

La présente invention apporte une solution nouvelle au problème de la constitution des tuyaux à section résistante et à déformabilité transversale, qui combine des qualités actuellement éparses, sans pour autant reproduire les inconvénients connus.

A cette fin, l'invention a pour objet un tuyau pour le transport de fluides, en particulier pour l'eau ou pour les gaz, du type comprenant au moins une conduite intérieure déformable transversalement selon toute sa longueur et dans laquelle doit circuler le fluide, ainsi qu'une gaine extérieure distincte de la conduite intérieure et toutes deux concentriques, caractérisé en ce que la conduite intérieure est étanche à elle seule et est extérieurement en métal à forte résistance mécanique pour supporter des efforts tels que force et chocs d'écrasement, de valeur nettement supérieure à celle de contraintes dues à un usage normal du tuyau, rongements et morsures d'animaux, percements, coupures et autres, et présente des espaces, des irrégularités ou une porosité de nature à retenir des impuretés, résidus et micro-organismes, tandis que la gaine extérieure est en une seule pièce de matière synthétique flexible, qui présente une résistance mécanique faible mais une surface extérieure continue et lisse, c'est-à-dire ne présentant ni espaces, ni irrégularités, ni même de porosité de nature à retenir des impuretés, résidus ou micro-organismes.

Selon d'autres caractéristiques de ce tuyau :
- la conduite intérieure comprend une armure en métal annelé non étanche placée autour d'un tuyau souple étanche;
- la conduite intérieure est en un matériau flexible armé d'éléments métalliques résistants à l'écrasement;
- la conduite intérieure et la gaine concentriques sont fixées l'une à l'autre;
- la conduite intérieure et la gaine concentriques sont libres et peuvent accepter un mouvement relatif entre elles;
- la conduite intérieure présente des marques apparentes sur sa surface extérieure, la gaine extérieure étant transparente;
- la gaine extérieure est transparente et porte un marquage soit intérieur, soit extérieur;
- le tuyau présente au moins un embout d'extrémité, celui-ci étant serti sur l'ensemble conduite-gaine.

L'invention a également pour objet un procédé de fabrication d'un tuyau pour le transport de fluides, en particulier pour l'eau ou pour les gaz, du type comprenant une conduite déformable transversalement selon toute sa longueur et dans laquelle doit circuler le fluide, caractérisé en ce que l'on réalise d'abord un tuyau ayant seulement une conduite dans laquelle doit circuler le fluide, puis on coupe dans une gaine préexistante en une seule pièce de matériau imperméable à surface extérieure lisse et continue, un segment de longueur correspondant à celle du tuyau, puis on dilate ce segment notamment par chauffage, puis on engage le tuyau dans ledit segment dilaté, puis on laisse refroidir l'ensemble.

Selon d'autres caractéristiques de ce procédé :
- le tuyau ayant une surface extérieure non lisse, en particulier formée d'anneaux, on choisit le diamètre intérieur de la gaine préexistante plus ou moins grand selon que l'on souhaite solidariser ou pas la conduite et la gaine concentriques par serrage naturel de la gaine extérieure lorsqu'elle se contracte lors de son refroidissement;
- on appose un marquage sur la gaine extérieure, soit avant, soit après introduction du tuyau;
- le tuyau devant recevoir au moins un embout d'extrémité, on introduit le tuyau dans la gaine, puis on place l'embout d'extrémité et on sertit sur l'ensemble tuyau-gaine une jupe que présente l'embout.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en perspective avec coupe partielle d'un segment de tuyau conforme à l'invention, composé d'une conduite intérieure adaptée au fluide à transporter et d'une gaine extérieure.

La figure 2 est une vue schématique en perspective avec coupe partielle d'un segment de tuyau conforme à l'invention, composé d'une conduite intérieure annelée adaptée au fluide à transporter et d'une gaine extérieure.

La figure 3 est vue schématique en coupe d'un segment de tuyau conforme à l'invention, composé d'une conduite intérieure annelée et d'une gaine extérieure engagée librement sur la conduite intérieure.

La figure 4 est vue schématique en coupe d'un segment de tuyau conforme à l'invention, composé d'une conduite intérieure annelée et d'une gaine extérieure fixée à la conduite intérieure par interpénétration des anneaux de la conduite intérieure et de la matière constitutive de la gaine extérieure.

La figure 5 est une vue schématique avec coupe partielle d'un tuyau conforme à l'invention composé d'une conduite intérieure marquée sur sa face extérieure et d'une gaine extérieure transparente.

La figure 6 est une vue schématique avec coupe partielle d'un tuyau conforme à l'invention composé d'une conduite intérieure et d'une gaine extérieure marquée.

La figure 7 est une vue schématique illustrant l'association de tuyaux rigides de type banal et d'un tuyau conforme à l'invention.

La figure 8 est une vue schématique avec coupe partielle d'un segment de tuyau conforme à l'invention dont une extrémité est munie d'un embout serti sur l'ensemble conduite-gaine.

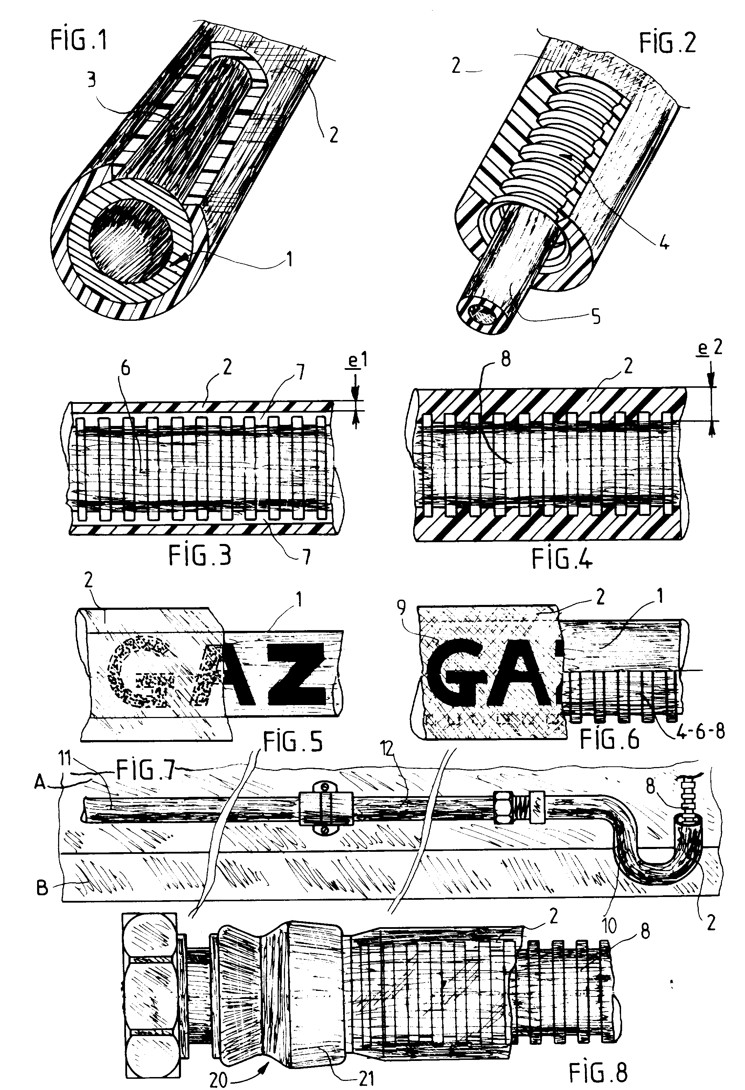

En se reportant à la figure 1 du dessin, on voit qu'un tuyau conforme à l'invention est composé d'une conduite intérieure 1 en un matériau flexible tel qu'un élastomère et d'une gaine extérieure 2 en matière synthétique imperméable et à surface extérieure lisse et continue.

La conduite intérieure 1 peut être faite en un matériau non seulement adapté aux caractéristiques du fluide à transporter (pression, température, acidité, etc.) mais également suffisamment résistant aux contraintes extérieures.

En d'autres termes, la conduite 1 pourrait se suffire à elle-même, si l'on ne tient compte que des aspects strictement techniques.

Sa surface extérieure 3, dont le dessin ne peut pas assurer le rendu parfait, a un toucher que l'on pourrait qualifier de lisse car cette surface ne présente pas d'aspérités, mais on doit bien distinguer une surface douce au toucher d'une surface réellement lisse, qui implique en outre qu'elle soit glissante et qu'elle ne présente aucune propension à retenir des impuretés ou de simples microbes.

Une surface simplement douce peut correspondre à un matériau plus ou moins poreux, propice à l'accrochage de salissures, poussières, impuretés, vapeurs grasses, micro-organismes et autres, de sorte que son nettoyage réel, "en profondeur", est très difficile.

Lorsqu'une telle conduite est destinée à l'alimentation en gaz d'appareils ménagers, elle est généralement située dans des endroits peu accessibles qui rendent le nettoyage encore plus difficile et pénible.

L'absence de nettoyage conduit directement à la création de foyers d'infection, de croissance de bactéries, sans compter le développement d'odeurs et l'arrivée d'insectes, de rongeurs et de parasites.

La gaine extérieure 2 n'est pas conçue pour renforcer la conduite intérieure 1 puisque celle-ci se suffit à elle-même.

Elle est un revêtement protecteur, interposé entre la surface extérieure de la conduite 1 et les agressions de l'ambiance extérieure.

La matière synthétique dans laquelle elle est faite est spécialement adaptée à cet usage, c'est-à-dire qu'elle doit être imperméable et continue, en une seule pièce, pour constituer un barrage physique, biologique et chimique tout le long du tuyau, qu'elle doit être chimiquement neutre, inerte, et que sa surface extérieure doit être aussi lisse que possible (c'est-à-dire glissante), voire antistatique.

Ces qualités permettent de prévenir les dépôts indésirables et d'en diminuer l'importance et, lorsqu'ils se produisent malgré tout, de permettre un nettoyage à la fois efficace et expéditif : un simple chiffon, une éponge, un papier nettoie-tout suffisent à rendre à la gaine extérieure 2 sa propreté d'origine puisqu'aucune impureté ne peut s'accrocher sérieusement à sa surface et encore moins pénétrer dans le matériau quand on frotte la gaine pour la nettoyer.

L'usage de produits désinfectants courants (chlore par exemple) ajoute à la simple propreté, l'avantage de l'hygiène et l'assurance de ne pas attirer des animaux, rongeurs ou parasites, par exemple.

Selon l'usage auquel le tuyau est destiné, la gaine extérieure 2 peut être engagée librement sur la conduite 1, sans aucune fixation entre elles ou bien, au contraire, la conduite 1 et la gaine 2 peuvent être fixées l'une à l'autre, notamment par collage.

Lorsque la conduite 1 et la gaine 2 sont indépendantes, un mouvement relatif entre elles est possible, ce qui rend le tuyau plus souple, plus facilement déformable transversalement.

Cette liberté de mouvement relatif peut être un avantage lorsque la conduite 1 est susceptible de se dilater radialement car l'augmentation de son diamètre extérieur est alors absorbée par un espace que l'on ménage entre la surface extérieure de la conduite 1 et la surface intérieure de la gaine 2.

La gaine 2 peut aussi avoir un diamètre intérieur pratiquement égal au plus grand diamètre extérieur de la conduite 1, afin que la gaine 2 soit simplement au contact de la conduite 1. L'ensemble est alors à la fois bien cohérent et aisément déformable.

Lorsque la conduite 1 et la gaine 2 sont fixées l'une à l'autre, elles sont solidarisées et forment un ensemble moins facilement déformable, de sorte que l'on préférera cette solution lorsque l'on souhaitera un tuyau peu flexible.

Le fait que la gaine 2 soit en un matériau imperméable, n'implique pas qu'elle doive être appliquée sur la conduite 1 de manière étanche.

Ses extrémités, en particulier, peuvent n'être pas fixées à la conduite 1 ou à des embouts rapportés, auquel cas un mouvement relatif longitudinal est possible entre la conduite 1 et la gaine 2.

Bien entendu, on peut aussi assujetir les extrémités de la gaine 2 à la conduite 1 ou à des embouts rapportés, ce qui donne alors une structure réellement étanche et sûre du point de vue propreté et hygiène.

On a indiqué plus haut que la conduite intérieure 1 pouvait se suffire à elle-même mais la présence de la gaine 2 à l'extérieur de la conduite 1 a pour conséquence que les caractéristiques mécaniques du tuyau tout entier dépendent pour une part de celles de la gaine 2.

En conséquence, il est possible de se fixer les paramètres de robustesse que le tuyau doit posséder et de réaliser la structure qui satisfait ces paramètres en combinant les caractéristiques individuelles de la conduite 1 et celles de la gaine 2.

De ce fait, la conduite 1 peut être moins robuste et donc moins chère que si elle était seule, de sorte que le prix final du tuyau peut rester raisonnable bien que l'usager bénéficie de qualités supplémentaires.

Si la gaine 2 doit peu ou prou contribuer à la résistance mécanique du tuyau, il est préférable qu'elle soit fixée à la conduite intérieure 1.

Sur la figure 2, on a représenté un mode de réalisation de l'invention selon lequel la conduite intérieure 4 est du type connu selon lequel elle est constituée en métal et présente une surface extérieure annelée.

On sait réaliser une telle conduite soit à anneaux individuels chaînés, soit par enroulement en spirale d'un feuillard d'acier.

Selon la technologie de fabrication utilisée, on obtient un ensemble parfaitement étanche à lui seul, ou nécessitant une conduite 5 imperméable au fluide qu'elle transporte, placée à l'intérieur de la conduite 4, laquelle devient alors une simple armure extérieure de renforcement de la conduite 5.

La conduite intérieure conforme à l'invention peut donc être subdivisée en deux : une conduite étanche 5 et une armure extérieure en métal 5.

Elle est donc extérieurement en métal, soit parce qu'elle est seule et en métal, soit parce qu'elle recouvre une autre conduite étanche 5, par exemple en matière plastique, en caoutchouc ou autre élastomère.

L'ensemble des deux conduites concentriques 4 et 5 constitue la structure déjà évoquée plus haut et qui est conçue pour être étanche et se suffire à elle-même du point de vue technique.

Mais la surface extérieure de la conduite 4 étant non lisse, elle présente tous les défauts déjà signalés quant à la propreté et à l'hygiène, et qui sont encore aggravés ici puisque les irrégularités de cette surface extérieure sont de profonds sillons dont il est impossible d'assurer l'intégrité.

Losqu'en plus la conduite 4 n'est pas étanche, ces sillons communiquent avec l'espace qui existe entre cette conduite 4 et la conduite 5, de sorte que l'on se trouve ici devant un véritable piège à microbes, voués à la prolifération et au développement bactérien pathogène.

La gaine extérieure 2 vient changer radicalement ces conditions désastreuses puisque sa fonction de barrage et de séparation permet de confiner tout l'espace situé à l'intérieur de ladite gaine 2 et de l'isoler de l'ambiance extérieure.

Les souillures ne peuvent donc intéresser que la surface extérieure lisse de la gaine 2, dont a déjà dit plus haut qu'elle prévient le dépôt de telles souillures et que s'il s'en produit néanmoins, elles sont facilement éliminées par un nettoyage très simple.

Ce n'est évidemment pas le cas de tuyaux dont la surface extérieure est "lisse", et en fait "douce", mais dont la porosité (parfois peu apparente) a pour conséquence que les impuretés pénètrent de plus en plus dans la matière au fur et à mesure que l'on frotte le tuyau dans l'espoir illusoire de le nettoyer.

Sur la figure 3, on a représenté le cas d'une conduite intérieure 6 de type en acier annelé, enveloppée d'une gaine extérieure 2 dont le diamètre intérieur est un peu supérieur au plus grand diamètre extérieur de la conduite 6, de sorte qu'il existe un petit espace annulaire 7 entre la conduite 6 et la gaine 2.

L'épaisseur e1 de la gaine 2 peut être relativement faible puisqu'elle ne participe pas à la solidité de l'ensemble, ses caractéristiques mécaniques étant faibles par comparaison à celles de la conduite 6 en acier.

Sur la figure 4, on a représenté le cas où la conduite intérieure 8 de type en acier annelé est associée à une gaine extérieure 2 fixée à elle.

On observe que la matière constitutive de la gaine 2 pénètre dans les intervalles entre anneaux.

Cela est obtenu en chauffant la gaine 2 afin de la dilater, puis en l'engageant sur la conduite 8 et enfin en faisant refroidir le tout, ce qui provoque la rétractation de la gaine 2 qui s'incruste en quelque sorte dans les irrégularités de la conduite 8.

Si l'on choisissait une gaine 2 de faible épaisseur, en particulier la gaine 2 de la figure 3 d'épaisseur e1, la déformation de la face interne de la gaine 2 se répercuterait sur sa face extérieure qui, avec d'évidentes atténuations, présenterait alors des irrégularités que l'on cherche précisément à éviter.

Même s'il ne s'agit que de simples ondulations, elles constituent encore une gène à la propreté et au nettoyage. Dans ce cas, la surface extérieure n'est pas "lisse" au sens que l'on donne ici à ce mot.

Il est donc préférable de choisir une gaine 2 dont l'épaisseur e2 est supérieure à l'épaisseur e1.

On est ainsi assurés que les déformations de la face interne de la gaine 2 seront absorbées par la matière constitutive de la gaine 2, c'est-à-dire amorties par l'épaisseur e2.

Outre la propreté et l'hygiène, les irrégularités de la face extérieure de la conduite intérieure 1, 4, 6 ou 8 auraient l'inconvénient de compliquer ou même de rendre impossible de marquage de cette face.

Le marquage des tuyaux est utile et pour certaines applications il est indispensable puisqu'il est rendu obligatoire par une norme.

C'est le cas, en particulier, des tuyaux flexibles qui doivent raccorder des appareils ménagers fonctionnant au gaz, à une conduite rigide et fixe d'alimentation générale.

Le marquage peut consister en une ou plusieurs mentions écrites, composées de lettres et/ou de chiffres, ou bien en un ou plusieurs symboles et/ou logos, ou bien en une couleur normalisée, apposée en bande ou de toute autre manière.

Sur une conduite intérieure 1 en élastomère, le marquage est peu recommandé car le nettoyage de la face extérieure qui porterait ce marquage aurait nécessairement pour effet indésirable d'effacer progressivement ce marquage qui finirait par disparaître totalement.

Sur une conduite en métal annelé, le marquage est pratiquement impossible et les essais réalisés, uniquement avec des encres noires, donnent un résultat nettement insuffisant pour répondre aux exigences des normes en vigueur internationalement.

Sur la figure 5, on a représenté un exemple de tuyau conforme à l'invention où l'on retrouve la conduite 1 et la gaine 2 de la figure 1, étant précisé qu'ici la conduite 1 est supposée de couleur claire, voire blanche, ainsi que l'on en rencontre dans la pratique.

Grâce à l'invention, on peut apposer un marquage directement sur la conduite 1 : lettres, chiffres, mots, marques, bandes de couleur, etc. par des moyens assez simples car la gaine 2, qui alors doit être transparente, recouvre le tout et protège complètement ce marquage puisqu'il devient inaccessible aussi bien aux impuretés extérieures qu'aux frottements dus au nettoyage.

On voit, ici, que le mot "G A Z" est directement visible sur la conduite 1, à la partie droite de la figure 5 puisque l'on a volontairement supposé que la gaine 2 est coupée, et qu'il est visible à travers la gaine 2, sur la partie gauche de cette même figure.

Sur la figure 6, on voit un double exemple : sur la partie supérieure de la figure, on a représenté une conduite intérieure 1 du même type que celui de la figure 1, alors qu'au-dessous on a représenté une conduite intérieure annelée, du type des figures 2, 3 et 4.

Qu'il s'agisse d'une conduite 1 ou d'une conduite 4-6-8, elle est entourée d'une gaine extérieure 2 mais comme la conduite intérieure 1 ou 4-6-8 est supposée inapte à recevoir un marquage convenable, celui-ci est apposé sur la gaine 2.

La gaine peut être opaque ou transparente.

Si elle est transparente, le marquage peut être prévu indifféremment sur la face extérieure ou sur la face intérieure de la gaine 2 puisqu'il est possible de percevoir ce marquage à travers la matière transparante dont la gaine 2 est faite.

Si elle est opaque, le marquage doit être apposé sur la face extérieure de la gaine 2 et cette face s'y prête particulièrement bien, du fait qu'elle est lisse et continue, et en une matière que l'Homme de Métier sait très bien imprimer.

On voit que le mot "G A Z" est visible sur la gaine 2 à la partie gauche de la figure alors que ce mot n'existe plus où l'on est sensé avoir coupé la gaine 2.

Avec l'exemple de la figure 6, on a choisi d'illustrer le cas où la gaine présente une bande longitudinale continue 9 d'une couleur fantaisiste ou normalisée, telle que bleue ou orange, le mot "G A Z" apparaissant en contraste sur cette bande 9.

La figure 7 illustre un mode de réalisation de l'invention selon lequel un tuyau 10 conforme à l'invention est associé à des tuyaux rigides 11 et 12 de type connu.

Il s'agit ici de tuyaux destinés au transport d'eau dans des locaux.

Les tuyaux classiques, en métal ou en plastique, se présentent en longueur importante de plusieurs mètres et leur mise en place n'est pas toujours facile car, en particulier lors de la traversée de cloisons, on ne dispose pas toujours du recul nécessaire à la mise en position d'un tuyau devant un passage de cloison, avant de le faire pénétrer dans ce passage.

Par ailleurs, les extrémités de ces tuyaux doivent être coupées de manière très précise lors de leur jonction avec des appareils sanitaires : lavabos, baignoires, bacs à douche, etc. et cela constitue une opération délicate, donc longue.

La présente invention permet de simplifier toutes ces opérations.

En effet, un tuyau conforme à l'invention étant ployable, c'est-à-dire conformable à un parcours non nécessairement rectiligne, on peut le stocker en rouleaux beaucoup plus compacts qu'un faisceau de tuyaux rigides, rouleaux qui sont plus faciles à manipuler pour leur chargement en camion, leur déchargement sur la chantier et leur montée en étage par des ascenseurs.

Le tuyau conforme à l'invention peut facilement être redressé en ligne droite après son débobinage et peut donc être utilisé comme un tuyau rectiligne rigide, alors que sa manutention et sa mise en place sont nettement plus faciles, et donc à la portée d'une main-d'oeuvre peu qualifiée, ce qui constitue autant de facteurs de gain de temps et d'économies.

Mais l'on peut aussi associer des tuyaux conformes à l'invention et des tuyaux standards, afin de conserver les tuyaux rigides traditionnels là où ils sont faciles à positionner en lignes droites, et d'utiliser les tuyaux ployables de l'invention partout où l'on a besoin de coudes, de courbes, de parcours sinueux ou de longueurs variables.

Sur la figure 7, on voit que les tuyaux 11 et 12 rectilignes et rigides sont fixés à un mur A, au-dessus d'un plinthe B, l'extrémité droite du tuyau 12 étant placée, éventuellement après coupure, non loin d'un point de raccordement (non visible sur le dessin) tel qu'un robinet de lavabo.

Grâce à l'invention, aucune précision n'est nécessaire car on fixe le tuyau 10 conforme à l'invention à l'extrémité du tuyau 12, et l'on raccorde l'autre extrémité du tuyau 10 après avoir donné à ce dernier la forme voulue, y compris comme représenté, en siphon.

On voit que la conduite intérieure 8 est entourée de la gaine 2 qui, pour ce genre d'applications peut être fixée à la conduite 1, comme on l'a décrit ci-dessus en regard de la figure 4.

En effet, on n'utilise que temporairement la qualité ployable du tuyau 10 car après mise en place, il doit donner une impression de rigidité définitive, bien qu'il reste déformable pour des opérations ultérieures de démontage.

La gaine 2 est alors faite en un matériau tel qu'elle puisse recevoir le même revêtement que celui prévu pour les tuyaux 11 et 12, en particulier de la peinture.

La forme stricte du tuyau 10 est donnée par l'ensemble conduite 8-gaine 2 et l'aspect est donné par la peinture à laquelle la matière de la gaine 2 est adaptée.

On obtient ainsi un ensemble homogène, d'apparence traditionnelle, alors que la mise en place est beaucoup plus simple et rapide que celle des tuyaux rigides.

Cela n'est évidemment pas possible avec les tuyaux en métal annelé connus, en raison de leur aspect tout à fait insolite et peu gratifiant pour des installations fixes, à caractère définitif.

Ces applications s'adaptent particulièrement bien aux travaux de rénovation et de réhabilitation de locaux anciens auxquels il est difficile et parfois impossible d'apporter des modifications en vue de faciliter les travaux de plomberie, y compris la manutention de tuyaux de grande longueur.

La figure 8 montre un exemple de tuyau conforme à l'invention, du type de celui de la figure 4, lorsqu'un tel tuyau doit être muni à au moins l'une de ses extrémités d'un embout 20 tel qu'un raccord.

On pourrait, bien entendu, fabriquer d'abord un tuyau avec la seule conduite intérieure 8 (éventuellement en protection d'une conduite étanche 5) et le ou les embouts 20, puis placer une gaine 2 autour de la conduite intérieure 8, les extrémités de la gaine 2 étant alors libres, à proximité du ou des embouts 20.

Cette structure correspond au cas où l'on ne recherche pas l'étenchéité entre la gaine extérieure 2 et la conduite intérieure 8.

Mais on ne bénéficierait qu'incomplétement des avantages de l'invention puisque des souillures pourraient s'infiltrer par ces extrémités libres de la gaine 2, entre elle et l'extérieur de la conduite 8.

C'est pourquoi, selon l'invention, on réalise d'abord l'ensemble conduite 8- gaine 2 puis on engage l'embout 20 par dessus la gaine 2 et l'on sertit une jupe 21 que présente l'embout 20 pour qu'elle pince ensemble la gaine extérieure 2 et la conduite intérieure 8.

On réalise ainsi un ensemble totalement étanche, d'un bout à l'autre du tuyau fini, ce qui garantit la protection complète de la conduite intérieure 8 par la gaine extérieure 2.

La gaine 2 a été représentée transparente et sans marquage mais il va de soi que la fixation d'un embout 20 peut être réalisée sur tout tuyau conforme à l'invention, quelles que soient les variantes choisies, telles qu'elles ont été décrites ci-dessus, associées ou pas à des dispositions qui font partie de l'Etat de la Technique.

L'invention trouve de très nombreuses applications, tant pour le transport de fluides consommables que pour des fluides sous pression (commandes hydrauliques par exemple), agressifs (gaz d'installations frigorifiques ou de conditionnement d'atmosphères par exemple), etc.

## Revendications

1. Tuyau pour le transport de fluides, en particulier pour l'eau ou pour les gaz, du type comprenant au moins une conduite intérieure déformable transversalement selon toute sa longueur et dans laquelle doit circuler le fluide, ainsi qu'une gaine extérieure distincte de la conduite intérieure et toutes deux concentriques, caractérisé en ce que la conduite intérieure (1) est étanche à elle seule et est extérieurement en métal à forte résistance mécanique pour supporter des efforts tels que force et chocs d'écrasement, de valeur nettement supérieure à celle de contraintes dues à un usage normal du tuyau, rongements et morsures d'animaux, percements, coupures et autres, et présente des espaces, des irrégularités ou une porosité de nature à retenir des impuretés, résidus et micro-organismes, tandis que la gaine extérieure (2) est en une seule pièce de matière synthétique flexible, qui présente une résistance mécanique faible mais une surface extérieure continue et lisse, c'est-à-dire ne présentant ni espaces, ni irrégularités, ni même de porosité de nature à retenir des impuretés, résidus ou micro-organismes.

2. Tuyau selon la revendication 1, caractérisé en ce que la conduite intérieure (1) comprend une armure en métal annelé non étanche (4) placée autour d'un tuyau souple étanche (5).

3. Tuyau selon la revendication 1, caractérisé en ce que la conduite intérieure (1) est en un matériau flexible armé d'éléments métalliques résistants à l'écrasement.

4. Tuyau selon la revendication 1, caractérisé en ce que la conduite intérieure (1-8) et la gaine (2) concentriques sont fixées l'une à l'autre.

5. Tuyau selon la revendication 1, caractérisé en ce que la conduite intérieure (6) et la gaine (2) concentriques sont libres et peuvent accepter un mouvement relatif entre elles.

6. Tuyau selon la revendication 1, caractérisé en ce que la conduite intérieure (1) présente des marques apparentes sur sa surface extérieure, la gaine extérieure (2) étant transparente.

7. Tuyau selon la revendication 1, caractérisé en ce que la gaine extérieure (2) est transparente et porte un marquage soit intérieur, soit extérieur.

8. Tuyau selon la revendication 1, caractérisé en ce que le tuyau présente au moins un embout d'extrémité (20), celui-ci étant serti sur l'ensemble conduite (1)-gaine (2).

9. Procédé de fabrication d'un tuyau pour le transport de fluides, en particulier pour l'eau ou pour les gaz, du type comprenant une conduite déformable transversalement selon toute sa longueur et dans laquelle doit circuler le fluide, caractérisé en ce que l'on réalise d'abord un tuyau ayant seulement une conduite (1-4-5-6-8) dans laquelle doit circuler le fluide, puis on coupe dans une gaine préexistante en une seule pièce de matériau imperméable à surface extérieure lisse et continue, un segment (2) de longueur correspondant à celle du tuyau, puis on dilate ce segment (2) notamment par chauffage, puis on engage le tuyau dans ledit segment (2) dilaté, puis on laisse refroidir l'ensemble.

10. Procédé selon la revendication 9, caractérisé en ce que le tuyau (4-5, 6, 8) ayant une surface extérieure non lisse, en particulier formée d'anneaux, on choisit le diamètre intérieur de la gaine préexistante plus ou moins grand selon que l'on souhaite solidariser ou pas la conduite (4-5, 6, 8) et la gaine (2) concentriques par serrage naturel de la gaine extérieure (2) lorsqu'elle se contracte lors de son refroidissement.

11. Procédé selon la revendication 9, caractérisé en ce que l'on appose un marquage sur la gaine extérieure (2), soit avant, soit après introduction du tuyau (1, 4-5, 6, 8).

12. Procédé selon la revendication 9, caractérisé en ce que le tuyau (1, 4-5, 6, 8) devant recevoir au moins un embout d'extrémité (20), on introduit le tuyau (1, 4-5, 6, 8) dans la gaine (2), puis on place l'embout d'extrémité (20) et on sertit sur l'ensemble tuyau-gaine une jupe (21) que présente l'embout (20).
